(19) Europäisches Patentamt
European Patent Office
Office européen des brevets

(11) **EP 4 657 038 A1**

(12) **EUROPEAN PATENT APPLICATION**
published in accordance with Art. 153(4) EPC

(43) Date of publication:
**03.12.2025  Bulletin 2025/49**

(21) Application number: **24869576.9**

(22) Date of filing: **05.02.2024**

(51) International Patent Classification (IPC):
*G01L 3/26* (2006.01)

(52) Cooperative Patent Classification (CPC):
**G01L 3/26**

(86) International application number:
**PCT/CN2024/076034**

(87) International publication number:
**WO 2025/066004 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **28.09.2023  CN 202311273580**

(71) Applicant: **Chongqing Changan Automobile Co., Ltd.**
**Chongqing 400023 (CN)**

(72) Inventors:
• **YANG, Yongjian**
  **Chongqing 400023 (CN)**
• **ZHANG, Hao**
  **Chongqing 400023 (CN)**
• **XIE, Kaifu**
  **Chongqing 400023 (CN)**
• **YU, Yinglong**
  **Chongqing 400023 (CN)**

(74) Representative: **Keller Schneider**
**Patent- und Markenanwälte AG**
**Eigerstrasse 2**
**Postfach**
**3000 Bern 14 (CH)**

(54) **EFFICIENCY TESTING SYSTEM AND METHOD FOR P13 CONFIGURATION ELECTRIC DRIVE ASSEMBLY**

(57)    An efficiency testing system for a P13 configuration electric drive assembly, comprising a bench control system (1), a model control system (2), a data acquisition system (3), a battery simulator (4), a first load motor (9), a second load motor (10), an engine simulation motor (11), a power analyzer (15), a first torque rotating speed sensor (12), a second torque rotating speed sensor (13), and a third torque rotating speed sensor (14). The model control system (2) is used, the operation state of each component can be calculated on the basis of a target accelerator signal sent by the bench control system (1), all the components automatically operate on the basis of the calculation results, information is then acquired from the data acquisition system (3) by means of the bench control system (1) and calculation is performed to obtain dynamic efficiency of a P13 configuration electric drive assembly. Also provided is an efficiency testing method for a P13 configuration electric drive assembly.

FIG.1

EP 4 657 038 A1

## Description

### TECHNICAL FIELD

The present disclosure relates to the technical field of bench tests, and particularly relates to an efficiency test system and method for a P13 configuration electric drive assembly.

### BACKGROUND

With increasingly stringent requirements for energy consumption of vehicles, major automobile manufacturers have developed hybrid power system vehicles to satisfy requirements of energy consumption regulations. A P13 configuration hybrid power system is one of mainstream hybrid power systems at present. A P13 configuration electric drive assembly includes a P1 electric motor, a clutch, a decelerator, and a P3 electric motor. The decelerator is provided with a first input end, a first output end, a second input end, and a second output end. The first input end is in transmission connection with the first output end. The second input end is in transmission connection with the second output end. The P3 electric motor is connected with the first input end of the decelerator. The P1 electric motor is connected with an input end of the clutch. An output end of the clutch is connected with the second input end of the decelerator. An efficiency test of the P13 configuration electric drive assembly is essential before vehicles are marketed.

The prior art provides a system and method for testing power-flow coupling efficiency of a hybrid power assembly. The method includes: determining a drive mode of the hybrid power assembly, where the drive mode includes a pure electric drive mode, an engine drive mode, a combined drive mode, a braking energy recovery mode, and a parking charging mode; setting parameters of an engine simulation frequency converter, a power generator frequency converter, a main drive motor frequency converter, a dynamometer motor frequency converter, an engine simulation motor, a power generator, a main drive motor and a dynamometer motor according to a determined drive mode, such that a parameter combination matches the determined drive mode; and determining coupling transfer efficiency of the hybrid power assembly, and measuring the coupling transfer efficiency of the hybrid power assembly under different power-flow transfer paths by a power analyzer and a rotation speed and torque sensor. However, the solution has no efficiency test under dynamic working conditions, which is inconsistent with dynamic working conditions of ordinary users and cannot comprehensively evaluate efficiency under use conditions of the ordinary users.

### SUMMARY OF THE INVENTION

A first objective of the present disclosure is to provide an efficiency test system for a P13 configuration electric drive assembly, so as to solve a problem that dynamic efficiency of the P13 configuration electric drive assembly cannot be tested in the prior art. A second objective of the present disclosure is to provide an efficiency test method for a P13 configuration electric drive assembly.

To achieve the above objectives, the present disclosure uses the following technical solutions:

An efficiency test system for a P13 configuration electric drive assembly includes a bench control system; a model control system, a battery simulator, a first load motor, a second load motor, an engine simulation motor and a power analyzer which are respectively connected with the bench control system; a first torque rotation speed sensor, a second torque rotation speed sensor, and a third torque rotation speed sensor; and a P1 electric motor, a P3 electric motor and a clutch of the P13 configuration electric drive assembly which are respectively connected with the bench control system. The P1 electric motor and the P3 electric motor are respectively connected with the battery simulator. An input end of the first torque rotation speed sensor is connected with a first output end of a decelerator. An output end of the first torque rotation speed sensor is connected with the first load motor. An input end of the second torque rotation speed sensor is connected with a second output end of the decelerator. An output end of the second torque rotation speed sensor is connected with the second load motor. An input end of the third torque rotation speed sensor is connected with the engine simulation motor. An output end of the third torque rotation speed sensor is connected with the P1 electric motor. The P1 electric motor and the P3 electric motor are respectively connected with the power analyzer.

According to the above method, the model control system may compute an output voltage value for the battery simulator according to an initial battery power input by the bench control system to supply power to the P1 electric motor and the P3 electric motor. Meanwhile, a driving resistance value may be computed according to torques and rotation speed values of the first torque rotation speed sensor and the second torque rotation speed sensor acquired by the bench control system, and corresponding instruction values may be sent to the first load motor and the second load motor, such that loading of the first load motor and the second load motor is conducted. Further, running states of all members may be computed according to a target throttle opening-degree signal sent by the bench control system, all the members are enabled to automatically run according to computed results. Then, the bench control system acquires torques and rotation speeds of the first torque rotation speed sensor, the second torque rotation speed sensor and the third torque rotation speed sensor, and an output electric power of the P1 electric motor and an input electric power of the P3 electric motor from the power analyzer, and dynamic efficiency of the P13 configuration electric drive assembly is computed. The method is consistent with dynamic use conditions of ordinary users, and can comprehensively evaluate efficiency of the ordinary users under the use conditions. The present disclosure can simulate a driving condition of a real person. The system can run automatically, such that efficiency of the P13 configuration electric drive assembly under any dynamic cycle condition is tested.

Further, the model control system is provided with an engine model, a P13 configuration electric drive assembly model, a battery model and a vehicle driving resistance model.

According to the above method, the engine model may be configured to compute whether to start an engine and a torque value of the engine; the P13 configuration electric drive assembly model may be configured to compute whether to start the P1 electric motor, a torque value of the P3 electric motor, whether to start the P1 electric motor, a rotation speed value of the P1 electric motor, and an engaged or disengaged state of the clutch; the battery model may be configured to compute the output voltage value; and the vehicle driving resistance model may be configured to compute the driving resistance value.

Further, the system further includes a data collection system. The bench control system, the first torque rotation speed sensor, the second torque rotation speed sensor, the third torque rotation speed sensor and the power analyzer are respectively connected with the data collection system.

According to the above method, the data collection system may collect: torques and rotation speed values of the first torque rotation speed sensor, the second torque rotation speed sensor and the third torque rotation speed sensor; and an output current value and an output electric power of the P1 electric motor and an input current value and an input electric power of the P3 electric motor from the power analyzer.

An efficiency test method for a P13 configuration electric drive assembly is applied to the above-mentioned efficiency test system for a P13 configuration electric drive assembly and includes the following steps:

S 1: a bench control system sends an initial battery charge-level value to a model control system;

S2: the model control system computes an output voltage value, and the bench control system acquires and sends the output voltage value to a battery simulator;

S3: the battery simulator raises an output voltage thereof to the output voltage value sent by the bench control system to supply power to a P1 electric motor and a P3 electric motor of the P13 configuration electric drive assembly;

S4: the bench control system acquires torques and rotation speeds of a first torque rotation speed sensor and a second torque rotation speed sensor, and inputs the torques and rotation speeds into the model control system, the model control system computes a driving resistance value, and the bench control system acquires the driving resistance value, and sends corresponding instruction values to a first load motor and a second load motor respectively;

S5: the first load motor and the second load motor load the torques thereof to corresponding instruction values sent by the bench control system;

S6: the bench control system sends a target throttle opening-degree signal to the model control system, and the model control system computes operation state results of an engine, the P1 electric motor, a clutch and the P3 electric motor according to a current battery charge-level and the target throttle opening-degree signal and outputs the operation state results to the bench control system;

S7: the bench control system sends received results to an engine simulation motor, the P1 electric motor, the clutch and the P3 electric motor respectively;

S8: the engine simulation motor, the P1 electric motor, the clutch and the P3 electric motor adjust operation states thereof according to the received results, and drive the first load motor and the second load motor to run;

S9: the bench control system acquires torques and rotation speeds of the first torque rotation speed sensor, the second torque rotation speed sensor and a third torque rotation speed sensor, and an output electric power of the P1 electric motor and an input electric power of the P3 electric motor from a power analyzer, and computes an operation efficiency of the P13 configuration electric drive assembly; and

S10: the bench control system acquires an output current value of the P1 electric motor and an input current value of the P3 electric motor from the power analyzer, feeds the acquired output current value and the acquired input current value back to the model control system, and the step S2 is returned to.

When the bench control system sends a stop instruction to the model control system, a test is finished.

According to the above technical method, the output voltage value may be computed for the battery simulator according to the initial battery power input by the bench control system to supply power to the P1 electric motor and the P3 electric motor. Meanwhile, the driving resistance value may be computed according to torques and rotation speed values of the first torque rotation speed sensor and the second torque rotation speed sensor acquired by the bench control system, and the corresponding instruction values may be sent to the first load motor and the second load motor, such that loading of the first load motor and the second load motor is conducted. Further, running states of all members may be computed according to the target throttle opening-degree signal sent by the bench control system, all the members are enabled to automatically run according to computed results. Then, the bench control system acquires the torques and rotation speeds of the first torque rotation speed sensor, the second torque rotation speed sensor and the third torque rotation speed sensor, and the output electric power of the P1 electric motor and the input electric power of the P3 electric motor from the power analyzer, and dynamic efficiency of the P13 configuration electric drive assembly is computed. The method is consistent with dynamic use conditions of ordinary users, and can comprehensively evaluate efficiency of the ordinary users under the use conditions. The present disclosure can simulate a driving condition of a real person. The system can run automatically, such that efficiency of the P13 configuration electric drive assembly under any dynamic cycle condition is tested.

Further, in the step S1, when the initial battery charge-level value is greater than or equal to 25% of total battery charge, the P13 configuration electric drive assembly is in a battery charge consumption state.

According to the above technical method, loading of the first load motor and the second load motor may be conducted in the battery charge consumption state.

Further, when a throttle opening-degree is greater than 70% of a total range:

in the step S6, the model control system computes to obtain results that the engine has started, P1 electric motor has started, clutch has been engaged and P3 electric motor has started;

in the step S7, the bench control system sends instructions of a torque value of the engine simulation motor, a rotation speed value of the P1 electric motor, an engaged state of the clutch and a torque value of the P3 electric motor to the engine simulation motor, the P1 electric motor, the clutch and the P3 electric motor respectively;

in the step S8, the engine simulation motor and the P3 electric motor are loaded to corresponding target torque values respectively, the P1 electric motor runs at a target rotation speed value, the clutch is engaged, and the first load motor and the second load motor are driven to start to run by joint action of both the P3 electric motor, through a first input end of a decelerator, and the engine simulation motor, through the P1 electric motor, the clutch and a second input end of the decelerator; and

in the step S9, an efficiency computation formula is:

$$\eta_{\text{consumption}} = \frac{P_{\text{output}}}{P_{\text{input}}} \times 100\% = \frac{P_1 + (T_1 \times n_1 + T_2 \times n_2)}{P_3 + (T_3 \times n_3)} \times 100\%$$

in the formula, $\eta_{\text{consumption}}$ is an operation efficiency of the P13 configuration electric drive assembly in the battery charge consumption state; $P_{\text{output}}$ is the total output power of the P13 configuration electric drive assembly; $P_{\text{input}}$ is the total input power of the P13 configuration electric drive assembly; $P_1$ is the output electric power of the P1 electric motor; $P_3$ is the input electric power of the P3 electric motor; $T_1$ is the torque of the first torque rotation speed sensor; $n_1$ is the rotation speed of the first torque rotation speed sensor; $T_2$ is the torque of the second torque rotation speed sensor; $n_2$ is the rotation speed of the second torque rotation speed sensor; $T_3$ is the torque of the third torque rotation speed sensor; and $n_3$ is the rotation speed of the third torque rotation speed sensor.

According to the above technical method, dynamic efficiency of the P13 configuration electric drive assembly in the battery charge consumption state when the throttle opening-degree is greater than 70% of the total range may be automatically computed.

Further, when a throttle opening-degree is smaller than or equal to 70% of a total range:

in the step S6, the model control system computes to obtain results that the engine has not started, the P1 electric motor has not started, the clutch has been disengaged and the P3 electric motor has started;

in the step S7, the bench control system sends instructions of engine simulation motor having not started, the P1 electric motor having not started, a disengaged state of the clutch and a torque value of the P3 electric motor to the engine simulation motor, the P1 electric motor, the clutch and the P3 electric motor respectively;

in the step S8, the engine simulation motor is not started, the P3 electric motor is loaded to a corresponding target torque value, the P1 electric motor is not started, the clutch is disengaged, and the first load motor and the second load motor are driven to start to run by only the P3 electric motor through a decelerator; and

in the step S9, an efficiency computation formula is:

$$\eta_{\text{consumption}} = \frac{T_1 \times n_1 + T_2 \times n_2}{P_3} \times 100\%$$

in the formula, $\eta_{consumption}$ is an operation efficiency of the P13 configuration electric drive assembly in the battery charge consumption state; $P_3$ is the input electric power of the P3 electric motor; $T_1$ is the torque of the first torque rotation speed sensor; $n_1$ is the rotation speed of the first torque rotation speed sensor; $T_2$ is the torque of the second torque rotation speed sensor; and $n_2$ is the rotation speed of the second torque rotation speed sensor.

According to the above technical method, dynamic efficiency of the P13 configuration electric drive assembly in the battery charge consumption state when the throttle opening-degree is smaller than or equal to 70% of the total range may be automatically computed.

Further, in the step S1, when the initial battery charge-level value is smaller than 25% of total battery charge, the P13 configuration electric drive assembly is in a battery charge maintenance state.

According to the above technical method, loading of the first load motor and the second load motor may be conducted in the battery charge maintenance state.

Further, in the step S6, the model control system computes to obtain results that the engine has started, the P1 electric motor has started, the clutch has been disengaged, and the P3 electric motor has started.

In the step S7, the bench control system sends instructions of a torque value of the engine simulation motor, a rotation speed value of the P1 electric motor, a disengaged state of the clutch and a torque value of the P3 electric motor to the engine simulation motor, the P1 electric motor, the clutch and the P3 electric motor respectively.

In the step S8, when the engine simulation motor and the P3 electric motor are loaded to corresponding target torque values, the clutch is disengaged, and the P1 electric motor runs at a target rotation speed value, the engine simulation motor drives the P1 electric motor to run and generate electricity, and the first load motor and the second load motor are driven to start to run by only the P3 electric motor through a decelerator.

In the step S9, an efficiency computation formula is:

$$\eta_{maintenance} = \eta_{\text{p1 power generation}} \times \eta_{\text{p3 drive}} = \frac{P_1}{T_3 \times n_3} \times \frac{T_1 \times n_1 + T_2 \times n_2}{P_3}$$

In the formula, $\eta_{maintenance}$ is an operation efficiency of the P13 configuration electric drive assembly in the battery charge maintenance state; $\eta_{\text{p1 power generation}}$ is the electricity generation efficiency of the P1 electric motor in the battery charge maintenance state; $\eta_{\text{p3 drive}}$ is the drive efficiency of the P3 electric motor in the battery charge maintenance state; $P_1$ is the output electric power of the P1 electric motor; $P_3$ is the input electric power of the P3 electric motor; $T_1$ is the torque of the first torque rotation speed sensor; $n_1$ is the rotation speed of the first torque rotation speed sensor; $T_2$ is the torque of the second torque rotation speed sensor; $n_2$ is the rotation speed of the second torque rotation speed sensor; $T_3$ is the torque of the third torque rotation speed sensor; and $n_3$ is the rotation speed of the third torque rotation speed sensor.

According to the above technical method, dynamic efficiency of the P13 configuration electric drive assembly in the battery charge maintenance state may be automatically computed.

The present disclosure has beneficial effects as follows:

(1) The present disclosure can simulate a driving condition of a real person. The system can run automatically, such that efficiency of the P13 configuration electric drive assembly under any dynamic cycle condition is tested.
(2) The present disclosure can test dynamic efficiency of the P13 configuration electric drive assembly in the battery charge consumption state.
(3) The present disclosure can test dynamic efficiency of the P13 configuration electric drive assembly in the battery charge maintenance state.

**BRIEF DESCRIPTION OF THE DRAWINGS**

FIG. 1 is a functional block diagram of an efficiency test system for a P13 configuration electric drive assembly according to the present disclosure;

FIG. 2 is a flow diagram of an efficiency test method for a P13 configuration electric drive assembly according to the present disclosure;

FIG. 3 is a flow diagram of acquiring efficiency of a P13 configuration electric drive assembly in a battery charge consumption state when a throttle opening-degree is 10% according to the present disclosure;

FIG. 4 is a flow diagram of acquiring efficiency of a P13 configuration electric drive assembly in a battery charge consumption state when a throttle opening-degree is 80% according to the present disclosure; and

FIG. 5 is a flow diagram of acquiring efficiency of a P13 configuration electric drive assembly in a battery charge maintenance state when a throttle opening-degree is 10% according to the present disclosure.

In the figures: 1-bench control system; 2-model control system; 3-data collection system; 4-battery simulator; 5-P1 electric motor; 6-clutch; 7-decelerator; 8-P3 electric motor; 9-first load motor; 10-second load motor; 11-engine simulation motor; 12-first torque rotation speed sensor; 13-second torque rotation speed sensor; 14-third torque rotation speed sensor; 15-power analyzer.

## DETAILED DESCRIPTION

Embodiments of the present disclosure will be illustrated below in conjunction with accompanying drawings and preferred examples. Those skilled in the art can easily understand other advantages and effects of the present disclosure from the content disclosed in the description. The present disclosure can also be implemented or applied through other different specific embodiments, and various details in the description can be modified or changed on the basis of different viewpoints and applications without departing from the spirit of the present disclosure. It should be understood that the preferred examples are only used for illustrating the present disclosure, instead of limiting the protective scope of the present disclosure.

It should be noted that the diagrams provided in the following examples only describe the basic idea of the present disclosure in an illustrative manner, so only components related to the present disclosure are shown in the diagrams instead of being drawn according to a number, a shape and a size of the components in actual implementation, types, numbers and proportions of all the components in actual implementation can be changed at will, and layout of the components may be more complicated.

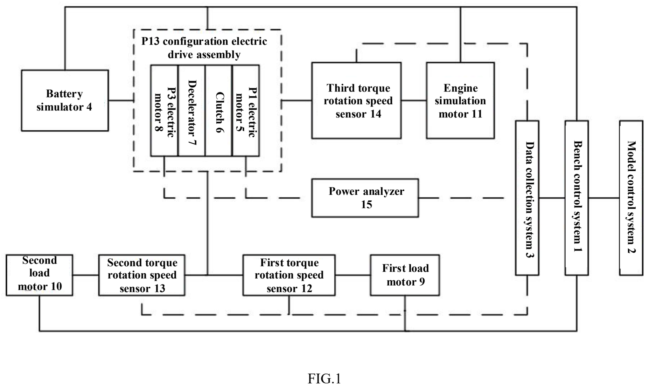

The example provides an efficiency test system for a P13 configuration electric drive assembly. As shown in FIG. 1, the system includes a bench control system 1; a model control system 2, a battery simulator 4, a first load motor 9, a second load motor 10, an engine simulation motor 11 and a power analyzer 15 which are respectively connected with the bench control system 1; and a first torque rotation speed sensor 12, a second torque rotation speed sensor 13, and a third torque rotation speed sensor 14. A P1 electric motor 5, a P3 electric motor 8 and a clutch 6 of the P13 configuration electric drive assembly are respectively connected with the bench control system 1. The P1 electric motor 5 and the P3 electric motor 8 are respectively connected with the battery simulator 4. An input end of the first torque rotation speed sensor 12 is connected with a first output end of a decelerator 7. An output end of the first torque rotation speed sensor 12 is connected with the first load motor 9. An input end of the second torque rotation speed sensor 13 is connected with a second output end of the decelerator 7. An output end of the second torque rotation speed sensor 13 is connected with the second load motor 10. An input end of the third torque rotation speed sensor 14 is connected with the engine simulation motor 11. An output end of the third torque rotation speed sensor 14 is connected with the P1 electric motor 5. The P1 electric motor 5 and the P3 electric motor 8 are respectively connected with the power analyzer 15.

According to the efficiency test system for a P13 configuration electric drive assembly, the model control system 2 may compute an output voltage value for the battery simulator 4 according to initial battery power input by the bench control system 1, so as to supply power to the P1 electric motor 5 and the P3 electric motor 8. Meanwhile, a driving resistance value may be computed according to torques and rotation speed values of the first torque rotation speed sensor 12 and the second torque rotation speed sensor 13 acquired by the bench control system 1, and corresponding instruction values may be sent to the first load motor 9 and the second load motor 10, such that loading of the first load motor 9 and the second load motor 10 is conducted. Further, running states of all members may be computed according to a target throttle opening-degree signal sent by the bench control system 1, all the members are enabled to automatically run according to computed results. Then, the bench control system 1 acquires torques and rotation speeds of the first torque rotation speed sensor 12, the second torque rotation speed sensor 13 and the third torque rotation speed sensor 14, and an output electric power of the P1 electric motor 5 and an input electric power of the P3 electric motor 8 from the power analyzer 15, and dynamic efficiency of the P13 configuration electric drive assembly is computed. The method is consistent with dynamic use conditions of ordinary users, and can comprehensively evaluate efficiency of the ordinary users under the use conditions. The example can simulate a driving condition of a real person. The system can run automatically, such that efficiency of the P13 configuration electric drive assembly under any dynamic cycle condition is tested.

In the example, the model control system 2 is provided with an engine model, a P13 configuration electric drive assembly model, a battery model and a vehicle driving resistance model. The engine model may be configured to compute whether to start an engine and a torque value of the engine. The P13 configuration electric drive assembly model may be configured to compute whether to start the P1 electric motor 5, a torque value of the P3 electric motor 8, whether to start the P1 electric motor 5, a rotation speed value of the P1 electric motor 5, and an engaged or disengaged state of the clutch 6.

The battery model may be configured to compute the output voltage value. The vehicle driving resistance model may be configured to compute the driving resistance value.

In the example, the system further includes a data collection system 3. The bench control system 1, the first torque rotation speed sensor 12, the second torque rotation speed sensor 13, the third torque rotation speed sensor 14 and the power analyzer 15 are respectively connected with the data collection system 3. The data collection system 3 may collect: torque and rotation speed values of the first torque rotation speed sensor 12, the second torque rotation speed sensor 13 and the third torque rotation speed sensor 14; and an output current value and an output electric power of the P1 electric motor 5 and an input current value and an input electric power of the P3 electric motor 8 from the power analyzer 15.

In the example, the model control system 2 is connected with the bench control system 1 through a controller area network (CAN) line, and receives an input signal required by each model sent by the bench control system 1. Meanwhile, model computation results are output to the bench control system 1, and the bench control system 1 controls the engine simulation motor 11, the first load motor 9, the second load motor 10, the data collection system 3, the P1 electric motor 5, the P3 electric motor 8 and the clutch 6 according to the computation results sent by the model control system 2 respectively. Meanwhile, the bench control system 1 receives corresponding information collected by the data collection system 3 of the first torque rotation speed sensor 12, the second torque rotation speed sensor 13, the third torque rotation speed sensor 14, and the power analyzer 15.

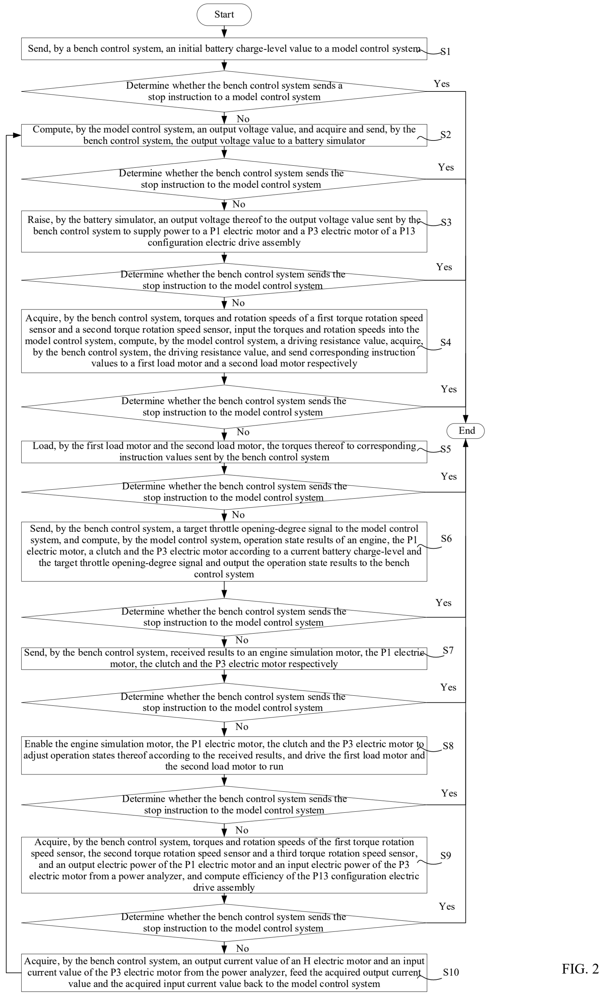

The example further provides an efficiency test method for a P13 configuration electric drive assembly. The method is applied to the above-mentioned efficiency test system for a P13 configuration electric drive assembly. As shown in FIG. 2, the method includes the following steps:

S1: a bench control system 1 sends an initial battery charge-level value to a model control system 2;

S2: the model control system 2 computes an output voltage value, and the bench control system 1 acquires and sends the output voltage value to a battery simulator 4;

S3: the battery simulator 4 increases an output voltage thereof to the output voltage value sent by the bench control system 1, so as to supply power to a P1 electric motor 5 and a P3 electric motor 8 of the P13 configuration electric drive assembly;

S4: the bench control system 1 acquires torques and rotation speeds of a first torque rotation speed sensor 12 and a second torque rotation speed sensor 13, the torques and rotation speeds are input into the model control system 2, the model control system 2 computes a driving resistance value, the bench control system 1 acquires the driving resistance value, and corresponding instruction values are sent to a first load motor 9 and a second load motor 10 respectively;

S5: the first load motor 9 and the second load motor 10 load the torques thereof to corresponding instruction values sent by the bench control system 1;

S6: the bench control system 1 sends a target throttle opening-degree signal to the model control system 2, and the model control system 2 computes and outputs operation state results of an engine, the P1 electric motor 5, a clutch 6 and the P3 electric motor 8 according to a current battery charge-level and the target throttle opening-degree signal to the bench control system 1;

S7: the bench control system 1 sends received results to an engine simulation motor 11, the P1 electric motor 5, the clutch 6 and the P3 electric motor 8 respectively;

S8: the engine simulation motor 11, the P1 electric motor 5, the clutch 6 and the P3 electric motor 8 adjust operation states thereof according to the received results, and the first load motor 9 and the second load motor 10 are driven to run;

S9: the bench control system 1 acquires torques and rotation speeds of the first torque rotation speed sensor 12, the second torque rotation speed sensor 13 and a third torque rotation speed sensor 14, and an output electric power of the P1 electric motor 5 and an input electric power of the P3 electric motor 8 from a power analyzer 15, and an operation efficiency of the P13 configuration electric drive assembly is computed; and

S10: the bench control system 1 acquires an output current value of the P1 electric motor 5 and an input current value of the P3 electric motor 8 from the power analyzer 15, the acquired output current value and the acquired input current value are fed back to the model control system 2, and the step S2 is returned to.

When the bench control system 1 sends a stop instruction to the model control system 2, a test is finished.

According to the efficiency test method for a P13 configuration electric drive assembly, the output voltage value may be computed for the battery simulator 4 according to initial battery power input by the bench control system 1, so as to supply power to the P1 electric motor 5 and the P3 electric motor 8. Meanwhile, the driving resistance value may be computed according to torques and rotation speed values of the first torque rotation speed sensor 12 and the second torque rotation speed sensor 13 acquired by the bench control system 1, and the corresponding instruction values may be sent to the first load motor 9 and the second load motor 10, such that loading of the first load motor 9 and the second load motor 10 is conducted. Further, running states of all members may be computed according to the target throttle opening-degree signal sent by the bench control system 1, all the members are enabled to automatically run according to computed results. Then, the bench control system 1 acquires torques and rotation speeds of the first torque rotation speed sensor 12 and the second torque rotation speed sensor 13, and the output electric power of the P1 electric motor 5 and the input electric power of the P3 electric motor 8 from the power analyzer 15, and dynamic efficiency of the P13 configuration electric drive assembly is computed. The method is consistent with dynamic use conditions of ordinary users, and can comprehensively evaluate efficiency of the ordinary users under the use conditions. The example can simulate a driving condition of a real person. The system can run automatically, such that efficiency of the P13 configuration electric drive assembly under any dynamic cycle condition is tested.

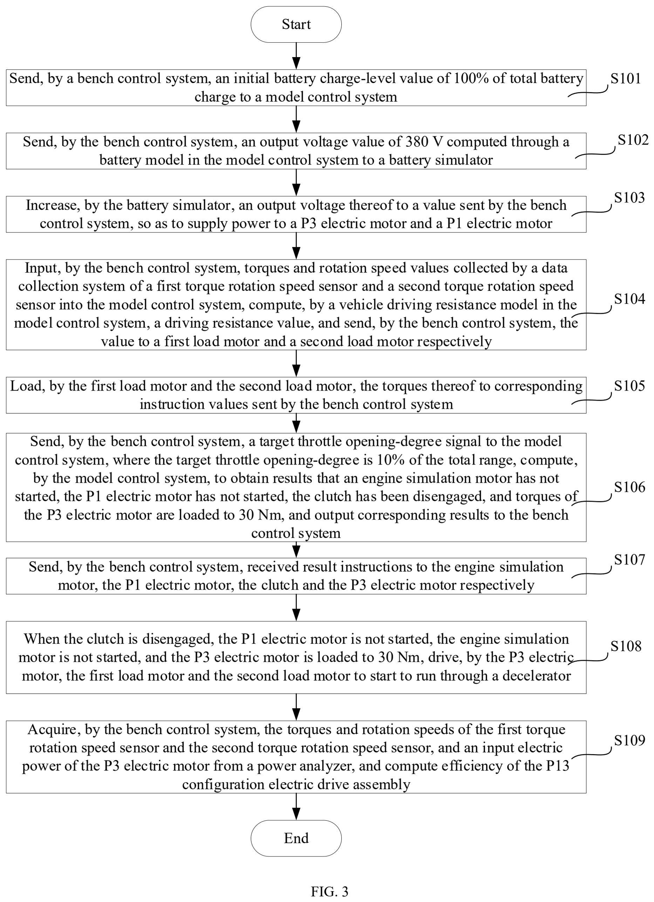

The example further provides an efficiency test method for a P13 configuration electric drive assembly in a battery charge consumption state. When a target throttle opening-degree is 10% of a total range, as shown in FIG. 3, the method includes the following steps:

S101: a bench control system 1 sends an initial battery charge-level value of 100% of total battery charge to a model control system 2;

S102: the bench control system 1 sends an output voltage value of 380 V computed through a battery model in the model control system 2 to a battery simulator 4;

S103: the battery simulator 4 increases an output voltage thereof to a value sent by the bench control system 1, so as to supply power to a P3 electric motor 8 and a P1 electric motor 5;

S104: the bench control system 1 inputs torques and rotation speed values collected by a data collection system 3 of a first torque rotation speed sensor 12 and a second torque rotation speed sensor 13 into the model control system 2, a vehicle driving resistance model in the model control system 2 computes a driving resistance value, and the bench control system 1 sends the value to a first load motor 9 and a second load motor 10 respectively;

S105: the first load motor 9 and the second load motor 10 load the torques thereof to corresponding instruction values sent by the bench control system 1;

S106: the bench control system 1 sends a target throttle opening-degree signal to the model control system 2, the target throttle opening-degree is 10% of the total range, the model control system 2 computes to obtain results that an engine simulation motor 11 has not started, the P1 electric motor 5 has not started, the clutch 6 has been disengaged, and torques of the P3 electric motor 8 are loaded to 30 Nm, and corresponding results are output to the bench control system 1;

S107: the bench control system 1 sends received result instructions to the engine simulation motor 11, the P1 electric motor 5, the clutch 6 and the P3 electric motor 8 respectively;

S108: when the clutch 6 is disengaged, the P1 electric motor 5 is not started, the engine simulation motor 11 is not started, and the P3 electric motor 8 is loaded to 30 Nm, the P3 electric motor 8 drives the first load motor 9 and the second load motor 10 to start to run through a decelerator 7; and

S109: the bench control system 1 acquires the torques and rotation speeds of the first torque rotation speed sensor 12 and the second torque rotation speed sensor 13, and an input electric power of the P3 electric motor 8 from a power analyzer 15, and an operation efficiency of the P13 configuration electric drive assembly is computed.

$$\eta_{\text{consumption}} = \frac{T_1 \times n_1 + T_2 \times n_2}{P_3} \times 100\%$$

In the formula, $\eta_{\text{consumption}}$ is an operation efficiency of the P13 configuration electric drive assembly in a battery charge consumption state; $P_3$ is the input electric power of the P3 electric motor 8; $T_1$ is the torque of the first torque rotation speed sensor 12; $n_1$ is the rotation speed of the first torque rotation speed sensor 12; $T_2$ is the torque of the second torque rotation speed sensor 13; and $n_2$ is the rotation speed of the second torque rotation speed sensor 13.

After an efficiency test is completed, the bench control system 1 acquires an output current value of the P1 electric motor 5 and an input current value of the P3 electric motor 8 from the power analyzer 15, the acquired output current value and the acquired input current value are fed back to the model control system 2, and the step S102 is returned to, such that closed-loop control and cyclic detection are achieved.

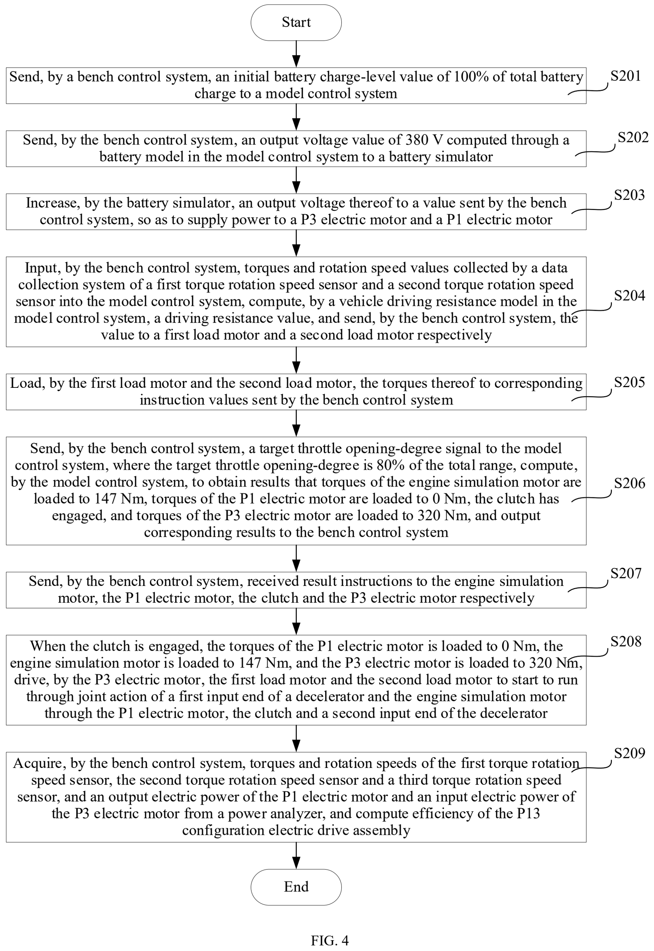

The example further provides an efficiency test method for a P13 configuration electric drive assembly in a battery charge consumption state. When a target throttle opening-degree is 80% of a total range, as shown in FIG. 4, the method includes the following steps:

S201: a bench control system 1 sends an initial battery charge-level value of 100% of total battery charge to a model control system 2;

S202: the bench control system 1 sends an output voltage value of 380 V computed through a battery model in the model control system 2 to a battery simulator 4;

S203: the battery simulator 4 increases an output voltage thereof to a value sent by the bench control system 1, so as to supply power to a P3 electric motor 8 and a P1 electric motor 5;

S204: the bench control system 1 inputs torques and rotation speed values collected by a data collection system 3 of a first torque rotation speed sensor 12 and a second torque rotation speed sensor 13 into the model control system 2, a vehicle driving resistance model in the model control system 2 computes a driving resistance value, and the bench control system 1 sends the value to a first load motor 9 and a second load motor 10 respectively;

S205: the first load motor 9 and the second load motor 10 load the torques thereof to corresponding instruction values sent by the bench control system 1;

S206: the bench control system 1 sends a target throttle opening-degree signal to the model control system 2, the target throttle opening-degree is 80% of the total range, the model control system 2 computes to obtain results that torques of the engine simulation motor 11 are loaded to 147 Nm, torques of the P1 electric motor 5 are loaded to 0 Nm, the clutch 6 has been engaged, and torques of the P3 electric motor 8 are loaded to 320 Nm, and corresponding results are output to the bench control system 1;

S207: the bench control system 1 sends received result instructions to the engine simulation motor 11, the P1 electric motor 5, the clutch 6 and the P3 electric motor 8 respectively;

S208: when the clutch 6 is engaged, the torques of the P1 electric motor 5 is loaded to 0 Nm, the engine simulation motor 11 is loaded to 147 Nm, and the P3 electric motor 8 is loaded to 320 Nm, the P3 electric motor 8 drives the first load motor 9 and the second load motor 10 to start to run through joint action of a first input end of a decelerator 7 and the engine simulation motor 11 through the P1 electric motor 5, the clutch 6 and a second input end of the decelerator 7; and

S209: the bench control system 1 acquires torques and rotation speeds of the first torque rotation speed sensor 12, the second torque rotation speed sensor 13 and a third torque rotation speed sensor 14, and an output electric power of the P1 electric motor 5 and an input electric power of the P3 electric motor 8 from a power analyzer 15, and an operation efficiency of the P13 configuration electric drive assembly is computed.

$$\eta_{\text{consumption}} = \frac{P_{\text{output}}}{P_{\text{input}}} \times 100\% = \frac{P_1 + (T_1 \times n_1 + T_2 \times n_2)}{P_3 + (T_3 \times n_3)} \times 100\%$$

In the formula, $\eta_{\text{consumption}}$ is an operation efficiency of the P13 configuration electric drive assembly in a battery charge consumption state; $P_{\text{output}}$ is the total output power of the P13 configuration electric drive assembly; $P_{\text{input}}$ is the total input power of the P13 configuration electric drive assembly; $P_1$ is the output electric power of the P1 electric motor 5; $P_3$ is the input electric power of the P3 electric motor 8; $T_1$ is the torque of the first torque rotation speed sensor 12; $n_1$ is the rotation speed of the first torque rotation speed sensor 12; $T_2$ is the torque of the second torque rotation speed sensor 13; $n_2$ is the rotation speed of the second torque rotation speed sensor 13; $T_3$ is the torque of the third torque rotation speed sensor 14; and $n_3$ is the rotation speed of the third torque rotation speed sensor 14.

After an efficiency test is completed, the bench control system 1 acquires an output current value of the P1 electric motor 5 and an input current value of the P3 electric motor 8 from the power analyzer 15, the acquired output current value and the acquired input current value are fed back to the model control system 2, and the step S202 is returned to, such that closed-loop control and cyclic detection may be achieved.

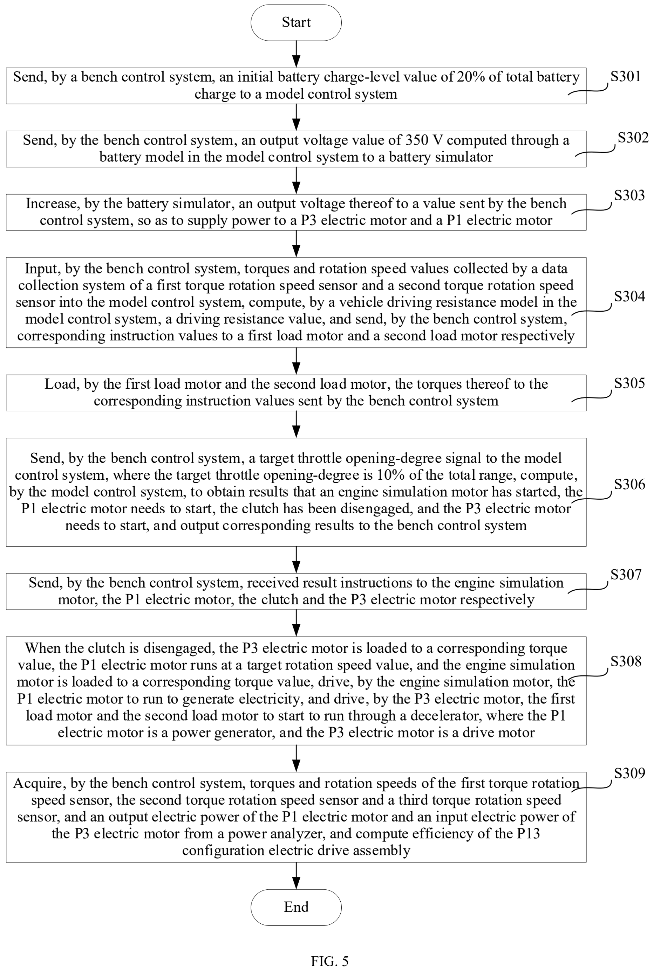

The example further provides an efficiency test method for a P13 configuration electric drive assembly in a battery charge maintenance state. As shown in FIG. 5, the method includes the following steps:

S301: a bench control system 1 sends an initial battery charge-level value of 20% of total battery charge to a model control system 2;

S302: the bench control system 1 sends an output voltage value of 350V computed through a battery model in the model control system 2 to a battery simulator 4;

S303: the battery simulator 4 increases an output voltage thereof to a value sent by the bench control system 1, so as to supply power to a P3 electric motor 8 and a P1 electric motor 5;

S304: the bench control system 1 inputs torques and rotation speed values collected by a data collection system 3 of a first torque rotation speed sensor 12 and a second torque rotation speed sensor 13 into the model control system 2, a vehicle driving resistance model in the model control system 2 computes a driving resistance value, and the bench control system 1 sends corresponding instruction values to a first load motor 9 and a second load motor 10 respectively;

S305: the first load motor 9 and the second load motor 10 load the torques thereof to the corresponding instruction values sent by the bench control system 1;

S306: the bench control system 1 sends a target throttle opening-degree signal to the model control system 2, the target throttle opening-degree is 10% of the total range, the model control system 2 computes to obtain results that an engine simulation motor 11 has started, the P1 electric motor 5 needs to start, the clutch 6 has been disengaged, and the P3 electric motor 8 needs to start, and corresponding results are output to the bench control system 1;

S307: the bench control system 1 sends received result instructions to the engine simulation motor 11, the P1 electric motor 5, the clutch 6 and the P3 electric motor 8 respectively;

S308: when the clutch 6 is disengaged, the P3 electric motor 8 is loaded to a corresponding torque value, the P1 electric motor 5 runs at a target rotation speed value, and the engine simulation motor 11 is loaded to a corresponding torque value, the engine simulation motor 11 drives the P1 electric motor 5 to run to generate electricity, and the P3 electric motor 8 drives the first load motor 9 and the second load motor 10 to start to run through a decelerator 7. That is, the P1 electric motor 5 is a power generator, and the P3 electric motor 8 is a drive motor; and

S309: the bench control system 1 acquires torques and rotation speeds of the first torque rotation speed sensor 12, the second torque rotation speed sensor 13 and a third torque rotation speed sensor 14, and an output electric power of the P1 electric motor 5 and an input electric power of the P3 electric motor 8 from a power analyzer 15, and an operation efficiency of the P13 configuration electric drive assembly is computed.

$$\eta_{\text{maintenance}} = \eta_{\text{p1 power generation}} \times \eta_{\text{p3 drive}} = \frac{P_1}{T_3 \times n_3} \times \frac{T_1 \times n_1 + T_2 \times n_2}{P_3}$$

In the formula, $\eta_{\text{maintenance}}$ is an operation efficiency of the P13 configuration electric drive assembly in a battery charge maintenance state; $\eta_{\text{p1 power generation}}$ is the electricity generation efficiency of the P1 electric motor 5 in the battery charge maintenance state; $\eta_{\text{p3 drive}}$ is the drive efficiency of the P3 electric motor 8 in the battery charge maintenance state; $P_1$ is the output electric power of the P1 electric motor 5; $P_3$ is the input electric power of the P3 electric motor 8; $T_1$ is the torque of the first torque rotation speed sensor 12; $n_1$ is the rotation speed of the first torque rotation speed sensor 12; $T_2$ is the torque of the second torque rotation speed sensor 13; $n_2$ is the rotation speed of the second torque rotation speed sensor 13; $T_3$ is the torque of the third torque rotation speed sensor 14; and $n_3$ is the rotation speed of the third torque rotation speed sensor 14.

After an efficiency test is completed, the bench control system 1 acquires an output current value of the P1 electric motor 5 and an input current value of the P3 electric motor 8 from the power analyzer 15, the acquired output current value and the acquired input current value are fed back to the model control system 2, and S302 is returned to, such that closed-loop control and cyclic detection may be achieved.

The above examples are only preferred examples used for fully explaining the present disclosure, and do not limit the protective scope of the present disclosure. Equivalent substitutions or transformations made by those skilled in the art on the basis of the present disclosure all fall within the protective scope of the present disclosure.

## Claims

1. An efficiency test system for a P13 configuration electric drive assembly, **characterized in** comprising a bench control system (1); a model control system (2), a battery simulator (4), a first load motor (9), a second load motor (10), an engine simulation motor (11) and a power analyzer (15) which are respectively connected with the bench control system (1); and a first torque rotation speed sensor (12), a second torque rotation speed sensor (13), and a third torque rotation speed sensor (14), wherein a P1 electric motor (5), a P3 electric motor (8) and a clutch (6) of the P13 configuration electric drive assembly are respectively connected with the bench control system (1), the P1 electric motor (5) and the P3 electric motor (8) are respectively connected with the battery simulator (4), an input end of the first torque rotation speed sensor (12) is connected with a first output end of a decelerator (7), an output end of the first torque rotation speed sensor (12) is connected with the first load motor (9), an input end of the second torque rotation speed sensor (13) is connected with a second output end of the decelerator (7), an output end of the second torque rotation speed sensor (13) is connected with the second load motor (10), an input end of the third torque rotation speed sensor (14) is connected with the engine simulation motor (11), an output end of the third torque rotation speed sensor (14) is connected with the P1 electric motor (5), and the P1 electric motor (5) and the P3 electric motor (8) are respectively connected with the power analyzer (15).

2. The efficiency test system for a P13 configuration electric drive assembly according to claim 1, **characterized in that** the model control system (2) is provided with an engine model, a P13 configuration electric drive assembly model, a battery model and a vehicle driving resistance model.

3. The efficiency test system for a P13 configuration electric drive assembly according to claim 2, **characterized in** further comprising a data collection system (3), wherein the bench control system (1), the first torque rotation speed sensor (12), the second torque rotation speed sensor (13), the third torque rotation speed sensor (14) and the power analyzer (15) are respectively connected with the data collection system (3).

4. An efficiency test method for a P13 configuration electric drive assembly applied to the efficiency test system for a P13 configuration electric drive assembly according to any one of claims 1 to 3, **characterized in** comprising the following steps:

> S1: a bench control system (1) sends an initial battery charge-level value to a model control system (2);
> S2: the model control system (2) computes an output voltage value, and the bench control system (1) acquires and sends the output voltage value to a battery simulator (4);
> S3: the battery simulator (4) raises an output voltage thereof to the output voltage value sent by the bench control system (1) to supply power to a P1 electric motor (5) and a P3 electric motor (8) of the P13 configuration electric drive assembly;
> S4: the bench control system (1) acquires torques and rotation speeds of a first torque rotation speed sensor (12) and a second torque rotation speed sensor (13) and inputs the torques and rotation speeds into the model control system (2), the model control system (2) computes a driving resistance value, and the bench control system (1) acquires the driving resistance value, and sends corresponding instruction values to a first load motor (9) and a second load motor (10) respectively;
> S5: the first load motor (9) and the second load motor (10) load the torques thereof to the corresponding instruction values sent by the bench control system (1);
> S6: the bench control system (1) sends a target throttle opening-degree signal to the model control system (2), and the model control system (2) computes operation state results of an engine, the P1 electric motor (5), a clutch (6) and the P3 electric motor (8) according to a current battery charge-level and the target throttle opening-degree signal and outputs the operation state results to the bench control system (1);
> S7: the bench control system (1) sends the received results to an engine simulation motor (11), the P1 electric motor (5), the clutch (6) and the P3 electric motor (8) respectively;
> S8: the engine simulation motor (11), the P1 electric motor (5), the clutch (6) and the P3 electric motor (8) adjust operation states thereof according to the received results, and drive the first load motor (9) and the second load motor (10) to run;
> S9: the bench control system (1) acquires torques and rotation speeds of the first torque rotation speed sensor (12), the second torque rotation speed sensor (13) and a third torque rotation speed sensor (14), and acquires an output electric power of the P1 electric motor (5) and an input electric power of the P3 electric motor (8) from a power analyzer (15), and computes an operation efficiency of the P13 configuration electric drive assembly; and
> S10: the bench control system (1) acquires an output current value of the P1 electric motor (5) and an input current value of the P3 electric motor (8) from the power analyzer (15) and feeds the acquired output current value and the acquired input current value back to the model control system (2), and the step S2 is returned to;
> wherein, when the bench control system (1) sends a stop instruction to the model control system (2), the test is finished.

5. The efficiency test method for a P13 configuration electric drive assembly according to claim 4, **characterized in that**, in the step S1, when the initial battery charge-level value is greater than or equal to 25% of total battery charge, the P13 configuration electric drive assembly is in a battery charge consumption state.

6. The efficiency test method for a P13 configuration electric drive assembly according to claim 5, **characterized in that** when a throttle opening-degree is greater than 70% of a total range:

> in the step S6, the model control system (2) computes to obtain results that the engine has started, the P1 electric motor (5) has started, the clutch (6) has been engaged and the P3 electric motor (8) has started;
> in the step S7, the bench control system (1) sends instructions of a torque value of the engine simulation motor (11), a rotation speed value of the P1 electric motor (5), an engaged state of the clutch (6) and a torque value of the P3 electric motor (8) to the engine simulation motor (11), the P1 electric motor (5), the clutch (6) and the P3 electric motor (8) respectively;
> in the step S8, the engine simulation motor (11) and the P3 electric motor (8) are loaded to corresponding target torque values respectively, the P1 electric motor (5) runs at a target rotation speed value, the clutch (6) is engaged, and the first load motor (9) and the second load motor (10) are driven to start to run by joint action of both the P3 electric motor (8), through a first input end of a decelerator (7), and the engine simulation motor (11), through the P1 electric motor (5), the clutch (6) and a second input end of the decelerator (7); and
> in the step S9, an efficiency computation formula is:

$$\eta_{\text{consumption}} = \frac{P_{\text{output}}}{P_{\text{input}}} \times 100\% = \frac{P_1 + (T_1 \times n_1 + T_2 \times n_2)}{P_3 + (T_3 \times n_3)} \times 100\%$$

in the formula, $\eta_{\text{consumption}}$ is the operation efficiency of the P13 configuration electric drive assembly in the battery charge consumption state; $P_{\text{output}}$ is the total output power of the P13 configuration electric drive assembly; $P_{\text{input}}$ is the total input power of the P13 configuration electric drive assembly; $P_1$ is the output electric power of the P1 electric motor (5); $P_3$ is the input electric power of the P3 electric motor (8); $T_1$ is the torque of the first torque rotation speed sensor (12); $n_1$ is the rotation speed of the first torque rotation speed sensor (12); $T_2$ is the torque of the second torque rotation speed sensor (13); $n_2$ is the rotation speed of the second torque rotation speed sensor (13); $T_3$ is the torque of the third torque rotation speed sensor (14); and $n_3$ is the rotation speed of the third torque rotation speed sensor (14).

7. The efficiency test method for a P13 configuration electric drive assembly according to claim 5, **characterized in that** when a throttle opening-degree is smaller than or equal to 70% of a total range:

in the step S6, the model control system (2) computes to obtain results that the engine has not started, the P1 electric motor (5) has not started, the clutch (6) has been disengaged and the P3 electric motor (8) has not started;
in the step S7, the bench control system (1) sends instructions of the engine simulation motor (11) having not started, the P1 electric motor (5) having not started, a disengaged state of the clutch (6) and a torque value of the P3 electric motor (8) to the engine simulation motor (11), the P1 electric motor (5), the clutch (6) and the P3 electric motor (8) respectively;
in the step S8, the engine simulation motor (11) is not started, the P3 electric motor (8) is loaded to a corresponding target torque value, the P1 electric motor (5) is not started, the clutch (6) is disengaged, and the first load motor (9) and the second load motor (10) are driven to start to run by only the P3 electric motor (8) through a decelerator (7); and
in the step S9, an efficiency computation formula is:

$$\eta_{\text{consumption}} = \frac{T_1 \times n_1 + T_2 \times n_2}{P_3} \times 100\%$$

in the formula, $\eta_{\text{consumption}}$ is the operation efficiency of the P13 configuration electric drive assembly in the battery charge consumption state; $P_3$ is the input electric power of the P3 electric motor (8); $T_1$ is the torque of the first torque rotation speed sensor (12); $n_1$ is the rotation speed of the first torque rotation speed sensor (12); $T_2$ is the torque of the second torque rotation speed sensor (13); and $n_2$ is the rotation speed of the second torque rotation speed sensor (13).

8. The efficiency test method for a P13 configuration electric drive assembly according to claim 4, **characterized in that**, in the step S1, when the initial battery charge-level value is smaller than 25% of total battery charge, the P13 configuration electric drive assembly is in a battery charge maintenance state.

9. The efficiency test method for a P13 configuration electric drive assembly according to claim 8, **characterized in that**:

in the step S6, the model control system (2) computes to obtain results that the engine has started, the P1 electric motor (5) has started, the clutch (6) has been disengaged and the P3 electric motor (8) has started;
in the step S7, the bench control system (1) sends instructions of a torque value of the engine simulation motor (11), a rotation speed value of the P1 electric motor (5), a disengaged state of the clutch (6) and a torque value of the P3 electric motor (8) to the engine simulation motor (11), the P1 electric motor (5), the clutch (6) and the P3 electric motor (8) respectively;
in the step S8, the engine simulation motor (11) and the P3 electric motor (8) are loaded to corresponding target torque values and the clutch (6) is disengaged, the P1 electric motor (5) runs at a target rotation speed value, the engine simulation motor (11) drives the P1 electric motor (5) to run and generate electricity, and the first load motor (9) and the second load motor (10) are driven to start to run by only the P3 electric motor (8) through a decelerator (7).

10. The efficiency test method for a P13 configuration electric drive assembly according to claim 8, **characterized in that**, in the step S9, an efficiency computation formula is:

$$\eta_{\mathrm{maintenance}} = \eta_{\mathrm{p1\ electricity\ generation}} \times \eta_{\mathrm{p3\ drive}} = \frac{P_1}{T_3 \times n_3} \times \frac{T_1 \times n_1 + T_2 \times n_2}{P_3}$$

in the formula, $\eta_{\mathrm{maintenance}}$ is the operation efficiency of the P13 configuration electric drive assembly in the battery charge maintenance state; $\eta_{\mathrm{p1\ electricity\ generation}}$ is the electricity generation efficiency of the P1 electric motor (5) in the battery charge maintenance state; $\eta_{\mathrm{p3\ drive}}$ is the drive efficiency of the P3 electric motor (8) in the battery charge maintenance state; $P_1$ is the output electric power of the P1 electric motor (5); $P_3$ is the input electric power of the P3 electric motor (8); $T_1$ is the torque of the first torque rotation speed sensor (12); $n_1$ is the rotation speed of the first torque rotation speed sensor (12); $T_2$ is the torque of the second torque rotation speed sensor (13); $n_2$ is the rotation speed of the second torque rotation speed sensor (13); $T_3$ is the torque of the third torque rotation speed sensor (14); and $n_3$ is the rotation speed of the third torque rotation speed sensor (14).

FIG.1

Start

Send, by a bench control system, an initial battery charge-level value to a model control system — S1

Determine whether the bench control system sends a stop instruction to a model control system — Yes

No

Compute, by the model control system, an output voltage value, and acquire and send, by the bench control system, the output voltage value to a battery simulator — S2

Determine whether the bench control system sends the stop instruction to the model control system — Yes

No

Raise, by the battery simulator, an output voltage thereof to the output voltage value sent by the bench control system to supply power to a P1 electric motor and a P3 electric motor of a P13 configuration electric drive assembly — S3

Determine whether the bench control system sends the stop instruction to the model control system — Yes

No

Acquire, by the bench control system, torques and rotation speeds of a first torque rotation speed sensor and a second torque rotation speed sensor, input the torques and rotation speeds into the model control system, compute, by the model control system, a driving resistance value, acquire, by the bench control system, the driving resistance value, and send corresponding instruction values to a first load motor and a second load motor respectively — S4

Determine whether the bench control system sends the stop instruction to the model control system — Yes

End

No

Load, by the first load motor and the second load motor, the torques thereof to corresponding instruction values sent by the bench control system — S5

Determine whether the bench control system sends the stop instruction to the model control system — Yes

No

Send, by the bench control system, a target throttle opening-degree signal to the model control system, and compute, by the model control system, operation state results of an engine, the P1 electric motor, a clutch and the P3 electric motor according to a current battery charge-level and the target throttle opening-degree signal and output the operation state results to the bench control system — S6

Determine whether the bench control system sends the stop instruction to the model control system — Yes

No

Send, by the bench control system, received results to an engine simulation motor, the P1 electric motor, the clutch and the P3 electric motor respectively — S7

Determine whether the bench control system sends the stop instruction to the model control system — Yes

No

Enable the engine simulation motor, the P1 electric motor, the clutch and the P3 electric motor to adjust operation states thereof according to the received results, and drive the first load motor and the second load motor to run — S8

Determine whether the bench control system sends the stop instruction to the model control system — Yes

No

Acquire, by the bench control system, torques and rotation speeds of the first torque rotation speed sensor, the second torque rotation speed sensor and a third torque rotation speed sensor, and an output electric power of the P1 electric motor and an input electric power of the P3 electric motor from a power analyzer, and compute efficiency of the P13 configuration electric drive assembly — S9

Determine whether the bench control system sends the stop instruction to the model control system — Yes

No

Acquire, by the bench control system, an output current value of an H electric motor and an input current value of the P3 electric motor from the power analyzer, feed the acquired output current value and the acquired input current value back to the model control system — S10

FIG. 2

```
                              ┌─────────┐
                              │  Start  │
                              └─────────┘
                                   │
                                   ▼
┌─────────────────────────────────────────────────────────────────┐
│ Send, by a bench control system, an initial battery charge-level  │  S101
│ value of 100% of total battery charge to a model control system   │
└─────────────────────────────────────────────────────────────────┘
                                   │
                                   ▼
┌─────────────────────────────────────────────────────────────────┐
│ Send, by the bench control system, an output voltage value of     │  S102
│ 380 V computed through a battery model in the model control        │
│ system to a battery simulator                                      │
└─────────────────────────────────────────────────────────────────┘
                                   │
                                   ▼
┌─────────────────────────────────────────────────────────────────┐
│ Increase, by the battery simulator, an output voltage thereof to a │  S103
│ value sent by the bench control system, so as to supply power to a │
│ P3 electric motor and a P1 electric motor                          │
└─────────────────────────────────────────────────────────────────┘
                                   │
                                   ▼
┌─────────────────────────────────────────────────────────────────┐
│ Input, by the bench control system, torques and rotation speed     │
│ values collected by a data collection system of a first torque     │
│ rotation speed sensor and a second torque rotation speed sensor    │  S104
│ into the model control system, compute, by a vehicle driving       │
│ resistance model in the model control system, a driving resistance │
│ value, and send, by the bench control system, the value to a first │
│ load motor and a second load motor respectively                    │
└─────────────────────────────────────────────────────────────────┘
                                   │
                                   ▼
┌─────────────────────────────────────────────────────────────────┐
│ Load, by the first load motor and the second load motor, the       │  S105
│ torques thereof to corresponding instruction values sent by the    │
│ bench control system                                               │
└─────────────────────────────────────────────────────────────────┘
                                   │
                                   ▼
┌─────────────────────────────────────────────────────────────────┐
│ Send, by the bench control system, a target throttle opening-      │
│ degree signal to the model control system, where the target        │
│ throttle opening-degree is 10% of the total range, compute, by     │
│ the model control system, to obtain results that an engine         │  S106
│ simulation motor has not started, the P1 electric motor has not     │
│ started, the clutch has been disengaged, and torques of the P3      │
│ electric motor are loaded to 30 Nm, and output corresponding       │
│ results to the bench control system                                │
└─────────────────────────────────────────────────────────────────┘
                                   │
                                   ▼
┌─────────────────────────────────────────────────────────────────┐
│ Send, by the bench control system, received result instructions    │  S107
│ to the engine simulation motor, the P1 electric motor, the clutch   │
│ and the P3 electric motor respectively                             │
└─────────────────────────────────────────────────────────────────┘
                                   │
                                   ▼
┌─────────────────────────────────────────────────────────────────┐
│ When the clutch is disengaged, the P1 electric motor is not         │
│ started, the engine simulation motor is not started, and the P3     │  S108
│ electric motor is loaded to 30 Nm, drive, by the P3 electric        │
│ motor, the first load motor and the second load motor to start to   │
│ run through a decelerator                                           │
└─────────────────────────────────────────────────────────────────┘
                                   │
                                   ▼
┌─────────────────────────────────────────────────────────────────┐
│ Acquire, by the bench control system, the torques and rotation     │
│ speeds of the first torque rotation speed sensor and the second     │  S109
│ torque rotation speed sensor, and an input electric power of the    │
│ P3 electric motor from a power analyzer, and compute efficiency of  │
│ the P13 configuration electric drive assembly                      │
└─────────────────────────────────────────────────────────────────┘
                                   │
                                   ▼
                              ┌─────────┐
                              │   End   │
                              └─────────┘
```

FIG. 3

```
                              ┌──────────┐
                              │  Start   │
                              └──────────┘
                                   │
                                   ▼
```

| | |
|---|---|
| Send, by a bench control system, an initial battery charge-level value of 100% of total battery charge to a model control system | S201 |

| | |
|---|---|
| Send, by the bench control system, an output voltage value of 380 V computed through a battery model in the model control system to a battery simulator | S202 |

| | |
|---|---|
| Increase, by the battery simulator, an output voltage thereof to a value sent by the bench control system, so as to supply power to a P3 electric motor and a P1 electric motor | S203 |

| | |
|---|---|
| Input, by the bench control system, torques and rotation speed values collected by a data collection system of a first torque rotation speed sensor and a second torque rotation speed sensor into the model control system, compute, by a vehicle driving resistance model in the model control system, a driving resistance value, and send, by the bench control system, the value to a first load motor and a second load motor respectively | S204 |

| | |
|---|---|
| Load, by the first load motor and the second load motor, the torques thereof to corresponding instruction values sent by the bench control system | S205 |

| | |
|---|---|
| Send, by the bench control system, a target throttle opening-degree signal to the model control system, where the target throttle opening-degree is 80% of the total range, compute, by the model control system, to obtain results that torques of the engine simulation motor are loaded to 147 Nm, torques of the P1 electric motor are loaded to 0 Nm, the clutch has engaged, and torques of the P3 electric motor are loaded to 320 Nm, and output corresponding results to the bench control system | S206 |

| | |
|---|---|
| Send, by the bench control system, received result instructions to the engine simulation motor, the P1 electric motor, the clutch and the P3 electric motor respectively | S207 |

| | |
|---|---|
| When the clutch is engaged, the torques of the P1 electric motor is loaded to 0 Nm, the engine simulation motor is loaded to 147 Nm, and the P3 electric motor is loaded to 320 Nm, drive, by the P3 electric motor, the first load motor and the second load motor to start to run through joint action of a first input end of a decelerator and the engine simulation motor through the P1 electric motor, the clutch and a second input end of the decelerator | S208 |

| | |
|---|---|
| Acquire, by the bench control system, torques and rotation speeds of the first torque rotation speed sensor, the second torque rotation speed sensor and a third torque rotation speed sensor, and an output electric power of the P1 electric motor and an input electric power of the P3 electric motor from a power analyzer, and compute efficiency of the P13 configuration electric drive assembly | S209 |

```
                                   │
                                   ▼
                              ┌──────────┐
                              │   End    │
                              └──────────┘
```

FIG. 4

Start

Send, by a bench control system, an initial battery charge-level value of 20% of total battery charge to a model control system — S301

Send, by the bench control system, an output voltage value of 350 V computed through a battery model in the model control system to a battery simulator — S302

Increase, by the battery simulator, an output voltage thereof to a value sent by the bench control system, so as to supply power to a P3 electric motor and a P1 electric motor — S303

Input, by the bench control system, torques and rotation speed values collected by a data collection system of a first torque rotation speed sensor and a second torque rotation speed sensor into the model control system, compute, by a vehicle driving resistance model in the model control system, a driving resistance value, and send, by the bench control system, corresponding instruction values to a first load motor and a second load motor respectively — S304

Load, by the first load motor and the second load motor, the torques thereof to the corresponding instruction values sent by the bench control system — S305

Send, by the bench control system, a target throttle opening-degree signal to the model control system, where the target throttle opening-degree is 10% of the total range, compute, by the model control system, to obtain results that an engine simulation motor has started, the P1 electric motor needs to start, the clutch has been disengaged, and the P3 electric motor needs to start, and output corresponding results to the bench control system — S306

Send, by the bench control system, received result instructions to the engine simulation motor, the P1 electric motor, the clutch and the P3 electric motor respectively — S307

When the clutch is disengaged, the P3 electric motor is loaded to a corresponding torque value, the P1 electric motor runs at a target rotation speed value, and the engine simulation motor is loaded to a corresponding torque value, drive, by the engine simulation motor, the P1 electric motor to run to generate electricity, and drive, by the P3 electric motor, the first load motor and the second load motor to start to run through a decelerator, where the P1 electric motor is a power generator, and the P3 electric motor is a drive motor — S308

Acquire, by the bench control system, torques and rotation speeds of the first torque rotation speed sensor, the second torque rotation speed sensor and a third torque rotation speed sensor, and an output electric power of the P1 electric motor and an input electric power of the P3 electric motor from a power analyzer, and compute efficiency of the P13 configuration electric drive assembly — S309

End

FIG. 5

## INTERNATIONAL SEARCH REPORT

| International application No. |
|---|
| **PCT/CN2024/076034** |

**A. CLASSIFICATION OF SUBJECT MATTER**

G01L3/26(2006.01)i

According to International Patent Classification (IPC) or to both national classification and IPC

**B. FIELDS SEARCHED**

Minimum documentation searched (classification system followed by classification symbols)

IPC:G01

Documentation searched other than minimum documentation to the extent that such documents are included in the fields searched

Electronic data base consulted during the international search (name of data base and, where practicable, search terms used)

CNABS, CNTXT, WPABSC, ENTXTC, DWPI, VEN, ENTXT, CNKI, 万方, WANFANG, 百度学术, BAIDU SCHOLAR, 超星读秀, DUXIU: P13, 电机, 电动机, 发动机, 发电机, 电驱, 驱动, 总成, 电池, 模拟, 仿真, 扭矩, 转矩, 转速, 速度, 功率, 仪, 计, 效率, 负载, 加载, 离合, 减速器, 减速箱, 阻力, 车阻, 模型, 台架, motor+, generator+, battery, simulat+, rotat+, speed, rate, velocity, analy+, load+, clutch, ecelerator, model, gantry

**C. DOCUMENTS CONSIDERED TO BE RELEVANT**

| Category* | Citation of document, with indication, where appropriate, of the relevant passages | Relevant to claim No. |
|---|---|---|
| X | CN 106092604 A (ZHEJIANG HOZON NEW ENERGY AUTOMOBILE CO., LTD.) 09 November 2016 (2016-11-09) <br> description, paragraphs 0028-0043, and figure 1 | 1-5, 8 |
| A | CN 112269093 A (BEIJING ELECTRIC VEHICLE CO., LTD.) 26 January 2021 (2021-01-26) <br> entire document | 1-10 |
| A | CN 109947085 A (SUZHOU HUAYE DETECTION TECHNOLOGY SERVICE CO., LTD.) 28 June 2019 (2019-06-28) <br> entire document | 1-10 |
| A | CN 219038367 U (SHAANXI FAST AUTO DRIVE GROUP CO., LTD.) 16 May 2023 (2023-05-16) <br> entire document | 1-10 |

☑ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **20 May 2024** | **23 May 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/076034**

## C. DOCUMENTS CONSIDERED TO BE RELEVANT

| Category* | Citation of document, with indication, where appropriate, of the relevant passages | Relevant to claim No. |
|---|---|---|
| A | CN 209820769 U (HNU-COOPERATION (JIANGSU) TEST & ANALYSIS TECHNOLOGY CO., LTD.) 20 December 2019 (2019-12-20) entire document | 1-10 |
| A | CN 111855197 A (WUT EPOWER CO., LTD.) 30 October 2020 (2020-10-30) entire document | 1-10 |
| A | CN 114923709 A (FIRST TRACTOR CO., LTD.) 19 August 2022 (2022-08-19) entire document | 1-10 |
| A | US 5262717 A (ONTARIO HYDRO) 16 November 1993 (1993-11-16) entire document | 1-10 |
| A | EP 4027000 A1 (TOYOTA MOTOR CO., LTD.) 13 July 2022 (2022-07-13) entire document | 1-10 |
| A | JP H11125583 A (TOYOTA MOTOR CORP.) 11 May 1999 (1999-05-11) entire document | 1-10 |
| A | US 2021063277 A1 (AVL LIST GMBH) 04 March 2021 (2021-03-04) entire document | 1-10 |

Form PCT/ISA/210 (second sheet) (July 2022)

## INTERNATIONAL SEARCH REPORT
### Information on patent family members

International application No.

**PCT/CN2024/076034**

| Patent document cited in search report | | | Publication date (day/month/year) | Patent family member(s) | | | Publication date (day/month/year) |
|---|---|---|---|---|---|---|---|
| CN | 106092604 | A | 09 November 2016 | None | | | |
| CN | 112269093 | A | 26 January 2021 | None | | | |
| CN | 109947085 | A | 28 June 2019 | None | | | |
| CN | 219038367 | U | 16 May 2023 | None | | | |
| CN | 209820769 | U | 20 December 2019 | None | | | |
| CN | 111855197 | A | 30 October 2020 | None | | | |
| CN | 114923709 | A | 19 August 2022 | None | | | |
| US | 5262717 | A | 16 November 1993 | DE | 509736 | T1 | 04 February 1993 |
| | | | | CA | 2065591 | A1 | 17 October 1992 |
| | | | | JPH | 0666653 | A | 11 March 1994 |
| | | | | EP | 0509736 | A1 | 21 October 1992 |
| EP | 4027000 | A1 | 13 July 2022 | JP | 2022107264 | A | 21 July 2022 |
| | | | | JP | 7452445 | B2 | 19 March 2024 |
| | | | | US | 2022220912 | A1 | 14 July 2022 |
| | | | | US | 11519349 | B2 | 06 December 2022 |
| JP | H11125583 | A | 11 May 1999 | JP | 3444163 | B2 | 08 September 2003 |
| US | 2021063277 | A1 | 04 March 2021 | EP | 3732458 | A1 | 04 November 2020 |
| | | | | EP | 3732458 | B1 | 21 June 2023 |
| | | | | WO | 2019129835 | A1 | 04 July 2019 |
| | | | | JP | 2021508059 | A | 25 February 2021 |
| | | | | JP | 7323531 | B2 | 08 August 2023 |
| | | | | KR | 20200101451 | A | 27 August 2020 |
| | | | | KR | 102636245 | B1 | 13 February 2024 |
| | | | | US | 11592357 | B2 | 28 February 2023 |
| | | | | AT | 520554 | B1 | 15 May 2019 |

Form PCT/ISA/210 (patent family annex) (July 2022)